# EUROPÄISCHE PATENTSCHRIFT

(11) **EP 2 469 985 B1**
(45) Veröffentlichungstag und Bekanntmachung des Hinweises auf die Patenterteilung: **13.02.2013**
(21) Anmeldenummer: 11195645.4
(22) Anmeldetag: 23.12.2011
(51) Int. Cl.: H05B 33/08, B60Q 11/00

(54) **Vorrichtung und Verfahren zur Sicherstellung der korrekten Auswertung von LED-Leuchten in Kombination mit Fahrzeug-Bordcomputern**
Device and method for ensuring LED lights are correctly evaluated in combination with on-board vehicle computers
Dispositif et procédé pour garantir l'exploitation correcte de lampes à DEL en combinaison avec des ordinateurs de bord de véhicules

(30) Priorität: 24.12.2010 DE 102010064149
(43) Veröffentlichungstag der Anmeldung: 27.06.2012
(73) Patentinhaber: Johann & Konen GmbH & Co. KG, 53229 Bonn (DE)
(72) Erfinder: Schlesinger, Christoph, 50389 Wesseling (DE); Oster, Axel, 53721 Siegburg (DE)
(74) Vertreter: Vossius & Partner

(56) Entgegenhaltungen:
- DE-A1-102004 027 676
- DE-A1-102004 045 435
- DE-A1-102005 055 574
- DE-C1- 10 215 486

## Beschreibung

Die Erfindung betrifft eine Vorrichtung sowie ein Verfahren, die/das sicherstellt, dass intakte bzw. defekte LED-Leuchten eines Fahrzeugs, insbesondere eines Anhängers, vom Bordcomputer eines Fahrzeuges korrekt erkannt werden.

Es ist bekannt, dass Bordcomputer von Fahrzeugen die Leuchten entweder per "Warmabfrage" oder per "Kaltabfrage" oder in einer Kombination von beiden Verfahren überwachen. Bei der "Warmabfrage" wird die Stromaufnahme der Leuchte während deren Betrieb überwacht und mit Untergrenzen und teils auch Obergrenzen verglichen. Bei der "Kaltabfrage" fließt ständig, d.h. im ausgeschalteten Zustand, ein kleiner Prüfstrom.

Bei LED-Leuchten, die eine merkbar geringere Stromaufnahme haben als Glühlampen-Leuchten, führen beide Systeme zu Problemen: im Falle der Warmabfrage reicht der Betriebsstrom nicht aus, so dass ein Fehler angezeigt wird. Im Falle der Kaltabfrage führt der Prüfstrom bereits zum Aufglimmen der LED-Leuchte und die Überwachung funktioniert je nach Höhe des Prüfstroms nicht korrekt.

Es finden sich Lösungen im Markt, bei denen durch Parallelschalten von Leistungswiderständen zu den LED-Leuchten ein ausreichend hoher Strom erzielt wird und die Warmabfrage keinen Defekt anzeigt. Dies führt sowohl bei der "Warmabfrage" wie auch bei der "Kaltabfrage" dazu, dass zwar keine Fehler angezeigt werden oder keine LED-Leuchten aufglimmen, allerdings ist auch keine korrekte Überwachung der LED-Leuchten möglich.

Weiterhin gibt es Lösungen, bei denen die Leistungswiderstände abhängig vom korrekten Funktionieren der LED-Leuchte zu- oder abgeschaltet werden. Dieses Arbeitsprinzip funktioniert allerdings nur dann korrekt, während das Überwachungsgerät mit Betriebsspannung versorgt wird. Im betriebsspannungslosen Zustand ist das Überwachungsgerät nicht in der Lage, den Zustand der LED-Leuchte korrekt zu signalisieren.

Bei einigen marktüblichen Lösungen wird ein Pull-down-Widerstand zur oben erwähnten Auswert-Elektronik bzw. LED-Leuchte permanent parallelgeschaltet, was aber wiederum keine korrekte Überwachung zulässt, sofern nur das "Kaltabfrage"-Verfahren genutzt wird, da ständig - auch wenn die LED-Leuchte defekt ist - ein kleiner Prüfstrom fließen kann.

Außerdem gibt es Geräte im Markt, die auf "Kaltabfrage"-Verfahren spezialisiert sind, aber für die korrekte Funktion einen Dauerplus-Anschluß benötigen, der aber nicht immer vorhanden ist.

Die marktüblichen Geräte haben also den Nachteil, dass sie nicht gleichzeitig für Fahrzeuge bzw. Bordcomputer mit "Warmabfrage"-Verfahren und mit "Kaitabfrage"-Verfahren geeignet sind.

Es ist eine Aufgabe der vorliegenden Erfindung, die Nachteile des Standes der Technik zu überwinden. Insbesondere liegt der vorliegenden Erfindung die Aufgabe zugrunde, eine Vorrichtung bereitzustellen, die sowohl bei Fahrzeugen mit "Warmabfrage" wie auch bei Fahrzeugen mit "Kaltabfrage" eingesetzt werden kann, ohne dass man einen Dauerplus-Anschluß benötigt. Vorzugsweise kann die erfindungsgemäße Vorrichtung als Nachrüstvorrichtung für ein bestehendes Fahrzeug ausgestaltet sein, und unabhänging davon sein, ob der Fahrzeug-Bordcomputer des nachzurüstenden Fahrzeugs für eine "Warmabfrage" oder eine "Kaltabfrage" ausgelegt ist.

Diese Aufgabe wird mit den Merkmalen der unabhängigen Patentansprüche gelöst. Die abhängigen Patentansprüche betreffen bevorzugte Ausführungsformen.

Die Erfindung hat insbesondere den Vorteil, dass mit ein und dem selben Gerät sowohl Fahrzeuge mit "Warmabfrage" wie auch Fahrzeuge mit "Kaltabfrage" bedient werden können, ohne dass ein Dauerplus-Anschluß nötig ist.

Insbesondere bezieht sich die vorliegende Erfindung auf eine Vorrichtung sowie ein Verfahren zur Überwachung von LED-Leuchten an Kraftfahrzeugen, wobei die vom Fahrzeug-Bordcomputer bzw. der Fahrzeug-Elektronik angesteuerten und überwachten LED-Leuchten um eine zusätzliche integrierte oder externe elektronische Schaltung ergänzt werden. Diese zusätzliche elektronische Schaltung lässt sowohl bei einer "Warmabfrage" im eingeschalteten Leuchten-Zustand und bzw. oder bei einer "Kaltabfrage" im ausgeschalteten Leuchten-Zustand eine korrekte Auswertung der Leuchten-Funktion zu. Dies wird vorzugsweise dadurch erreicht, indem die Leuchte mittels einer Elektronik - die Teil der zusätzlichen elektronischen Schaltung ist - überwacht wird. Diese Elektronik (Überwachungselektronik) ist dazu angepasst ein bi-stabiles Relais zu schalten, wobei mittels Schalten des Relais ein Stromverbraucher zu bzw. abgeschaltet wird.

Vorzugsweise sind die zwei Zustände des bi-stabilen Relais den entsprechenden zwei Zuständen der LED-Leuchte, d.h. funktionsfähig - nicht funktionsfähig zugeordnet. Vorzugsweise erfolgt die Umschaltung des bi-stabilen Relais nur dann, wenn der Status der angeschlossenen Leuchte nicht mit dem Status des bi-stabilen Relais übereinstimmt. Daraus ergibt sich z.B., dass bei einem sich einstellenden Defekt der LED-Leuchte die Abschaltung des Stromverbrauchers nur dann erfolgt, wenn das bi-stabile Relais zum Zeitpunkt des Defekts eingeschaltet ist.

Erfindungsgemäß wird für das Umschalten des bi-stabile Relais vorzugsweise keine zusätzliche Stromversorgung benötigt, d.h. die Versorgungsspannung zum Betreiben der LED-Leuchte reicht vorzugsweise aus für den Schaltvorgang des bi-stabilen Relais. So kann beispielsweise auf eine zusätzliche Versorgungsspannung bzw. einen zusätzlichen Speicher, wie Batterie und/oder Kondensator für die Umschaltung des bi-stabilen Relais verzichtet werden. Es ist weiter bevorzugt, dass ein Umschalten des Relais generell nur während eines Warmzustandes (An-Zustand) erfolgt. Dies ist besonders Vorteilhaft, da im Warmzustand die Spannung, die zum Betreiben der LED verwendet wird, für das Umschaltend des Relais verwendet werden kann. Im Kaltzustand wird das Relais vorzugsweise nicht umgeschaltet, insbesondere da hierfür eine zusätzliche Versorgungsspannung nötig wäre.

Vorzugsweise weist die Elektronik (Überwachungselektronik) einen Stromsensor und/oder eine Auswert-Elektronik auf. Erfindungsgemäß wird die Funktionsweise der LED-Leuchte mittels Überwachungselektronik vorzugsweise nur im Warmzustand (während einer Warmabfrage) überprüft und eine Änderung des Zustands an das bi-stabile Relais zum Umschalten nur im Warmzustand übermittelt. D.h., erfindungsgemäß wird vorzugsweise nur während einer Warmabfrage der Funktionszustand der LED ermittelt und dieser Zustand nur bei einer festgestellten Änderung durch ein Umschalten des Relais von einem Zustand in den anderen Zustand während der Warmabfrage durchgeführt. Vorzugsweise wird während einer Kaltabfrage der Zustand der LED nicht mittels Überwachungselektronik ermittelt und auch vorzugsweise das bi-stabile Relais nicht umgeschaltet. Das beibehalten des Zustands des bi-stabilen Relais während einer Kaltabfrage ermöglicht es jedoch, dass bestehende Kaltabfragemechanismen im Kraftfahrzeug ein korrektes Ergebnis bezüglich des Funktionszustands der LED liefern.

Wenn die LED funktioniert kann dies erfindungsgemäß im Warmzustand mittels ermittelt Überwachungselektronik werden. Das bi-stabile Relais verbleibt im "funktionsfähig Zustand", auch wenn danach mehrmals von einem An-Zustand (LED einschalten) in einen Kalt-Zustand (LED ausschalten) gewechselt wird. Im An-Zustand ist das Relais dann in einem entsprechenden ""Funktionsfähig-Zustand" bei dem der Leistungswiderstand zugeschaltet ist. Somit kann im Warmzustand der Zustand der LED gemessen werden aktiv, als auch im Kaltzustand die Funktionsfähigkeit angezeigt werden, aufgrund des zugeschalteten Widerstandes. D.h., wenn die LED funktioniert verbleibt das bi-stabile Relais im "Funktionsfähig-Zustand" (erster Zustand des bi-stabilen Relais).

Wenn die LED auf einmal nicht mehr funktioniert, wird dies erstmalig in einer Warmabfrage festgestellt. Sobald die Nicht-Funktionsfähigkeit der LED in der Warmabfrage festgestellt wird, wird in der Warmabfrage (An-Zustand) das bi-stabile Relais (einmalig) in den "Nicht-Funktionsfähig-Zustand" umgeschaltet. Das bi-stabile Relais verbleibt anschließend in diesem "Nicht-Funktionsfähig-Zustand", auch wenn danach mehrmals versucht wird, die LED-Leuchte An und Aus zuschalten. Somit kann ein dauerndes Hin- und Herschalten des bi-stabile Relais vermieden werden. Somit ist vorzugsweise lediglich ein einziges Umschalten des bi-stabile Relais vom "Funktionsfähig-Zustand" in den "Nicht-Funktionsfähig-Zustand" bei erstmaliger Feststellung der Nichtfunktionsfähigkeit nötig.

Erfindungsgemäß kann das bi-stabile Relais vorzugsweise mechanisch und/oder elektronisch aufgebaut sein. Vorzugsweise ist der Stromverbraucher durch einen Leistungswiderstand realisiert. Der Widerstand ist vorzugsweise dauerhaft zugeschaltet.

Weiter bevorzugt hält das bi-stabile Relais seinen Schaltzustand auch ohne anliegende Versorgungsspannung aufrecht. Zudem ist es bevorzugt, dass das bi-stabile Relais in einer Reihenschaltung zum Stromverbraucher geschaltet ist. Weiter ist es bevorzugt, dass das Relais parallel zur Elektronik geschaltet ist.

Vorzugsweise wird in der erfindungsgemäßen Vorrichtung bzw. im erfindungsgemäßen Verfahren eine Rücksetz-Funktion derart ausgestaltet, dass parallel zum bi-stabilen Relais eine Überbrückungs-Schaltung integriert wird. Diese Überbrückungs-Schaltung überbrückt vorzugsweise das bi-stabile Relais und stellt eine Verbindung zwischen dem Fahrzeug-Bordcomputer und dem Stromverbraucher her, wodurch bei Fahrzeugen mit speziellen Kaltabfrage-Systemen eine Reaktivierung des Fahrzeug-Bordcomputer-Ausgangs vorgenommen oder ermöglicht wird.

Zudem kann es erfindungsgemäß bevorzugt sein, dass sich ein (zweites) Relais oder (zweites) Schaltelement in Reihe zur LED-Leuchte und zur Überwachungselektronik befindet und sich ein bi-stabiles Relais in Reihe zum Stromverbraucher befindet. Auch kann es bevorzugt sein, dass durch ein Elektronik-Modul oder die Überwachungselektronik eine Rücksetzfunktion z.B. nach dem Austausch einer defekten Leuchte realisiert wird.

Gemäß einer bevorzugten Ausführungsform kann in einer speziellen Ausprägung das (zweite) Schaltelement und das bi-stabile Relais zu einem einzelnen Schaltelement zusammengefasst werden.

Im Einzelnen gibt es nun verschiedene Möglichkeiten, die erfindungsgemäße Vorrichtung bzw. das erfindungsgemäße Verfahren auszugestalten und weiterzubilden. Hierzu wird einerseits auf die den unabhängigen Patentansprüchen folgenden abhängigen Patentansprüche verwiesen, andererseits auf die folgenden Aspekte sowie folgende Beschreibung eines bevorzugten Ausführungsbeispiels der Vorrichtung bzw. des Verfahrens in Verbindung mit den Zeichnungen.

In den Zeichnungen werden gleiche Bezugszeichen jeweils für die gleichen Einheiten verwendet. Es zeigen
Fig. 1: eine schematische Darstellung einer erfindungsgemäßen elektronischen Schaltung zur Realisierung des erfindungsgemäßen Verfahrens; und
Fig. 2: eine schematische Darstellung einer weiteren elektronischen Schaltung zur Realisierung des erfindungsgemäßen Verfahrens .

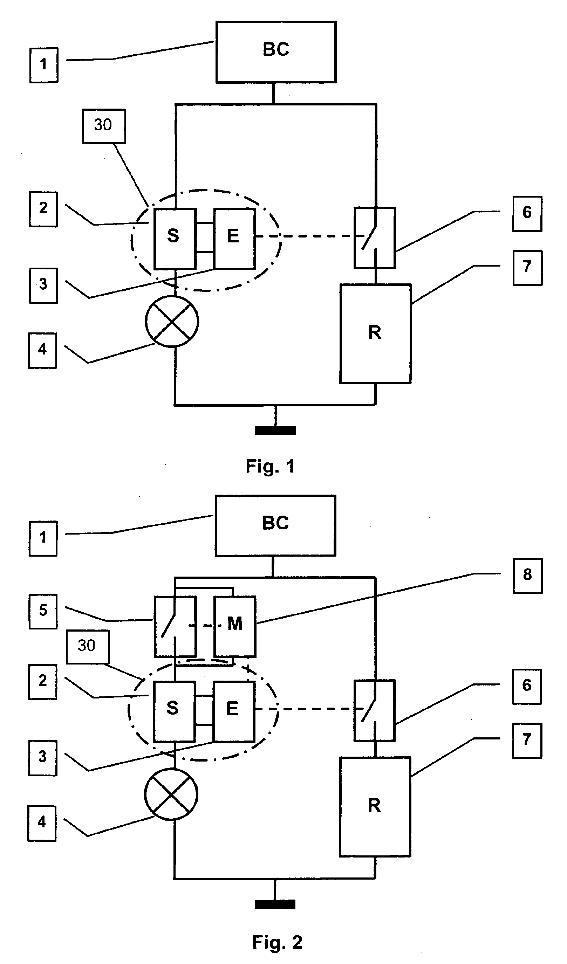

Figur 1 zeigt ein bevorzugtes Ausführungsbeispiel einer erfindungsgemäßen Schaltung zur Realisierung des erfindungsgemäßen Verfahrens. Die Schaltung kann entweder an einen vorhanden Bordcomputer (BC) 1 angeschlossen werden, z.B. als Nachrüstlösung oder in einen Bordcomputer integriert sein. Der Bordcomputer übernimmt vorzugsweise die Spannungsversorgung der nachfolgenden Schaltung bzw. das Einschalten der Leuchte und ist zudem mit den Überwachungsfunktionen "Warmabfrage" und/oder "Kaltabfrage" ausgestattet.

Die Schaltung ist im Wesentlichen in zwei Zweige aufgeteilt: der erste Zweig weist eine LED-Leuchte 4 sowie einen vor- oder nachgeschalteten Stromsensor (S) 2 sowie eine Elektronik (E) 3 zur Auswertung der Stromsensor-Signale auf. Der zweite Zweig, der vorzugsweise parallel zum ersten Zweig geschaltet ist, umfasst ein Relais 6 sowie einen Widerstand (R) 7.

In einer vorteilhaften Ausprägung ist das Relais 6 als bi-stabiles Relais ausgelegt. Dadurch muss während des eingeschalteten Zustands der LED-Leuchte 4 sowie der Auswert-Elektronik 3 die Auswert-Elektronik 3 für eine Zustandsänderung lediglich einen Stromimpuls auf das Relais 6 geben. Dieser Zustand wird dann auch im ausgeschalteten Zustand gehalten, wodurch die zusätzliche Dauerplus-Versorgung entfallen kann.

Nach einer besonderen Anwendung ist vorgesehen, dass das Relais 6 nicht als mechanisches Relais aufgebaut ist, sondern als elektronisches Relais, das vorzugsweise wiederum bi-stabil arbeitet und seine Schaltzustände permanent, d.h. auch ohne Stromzufuhr speichern kann.

Nach einer weiteren besonderen Anwendung ist vorgesehen, dass sich gemäß Fig. 2 ein (zweites) Relais oder Schaltelement 5 in Reihe zur LED-Leuchte 4 und zur Überwachungs-Elektronik befindet und sich ein bi-stabiles Relais 6 in Reihe zum Stromverbraucher (Widerstand) 7 befindet. Weiterhin kann in diesem Fall ein Elektronik-Modul (M) 8 vorgesehen werden, das parallel zum (zweiten) Schaltelement 5 geschaltet ist. Dadurch erhält das Relais 6 die Schaltzustands-Information nicht direkt von der Auswert-Elektronik 3, sondern in Kombination mit dem Elektronik-Modul 8, wodurch gewährleistet werden kann, dass durch eine im Elektronik-Modul 8 integrierte Rücksetz-Funktion nach Austausch einer defekten LED-Leuchte die korrekte Funktion wieder hergestellt werden kann. Vorzugsweise werden Elektronik-Modul 8 und Auswert-Elektronik 3 in einer Baugruppe realisiert.

Ebenfalls vorzugsweise ist der Widerstand 7 als Leistungswiderstand mit einer Stromaufnahme ähnlich einer marktüblichen Glühlampe ausgelegt.

Mittels Auswert-Elektronik 3 kann eine "Warmabfrage" der LED-Leuchte 4 durchgeführt werden. Wenn die LED-Leuchte 4 in Ordnung ist, dann wird bzw. bleibt der Relais-Kontakt (6) geschlossen. Wenn die Leuchte nicht in Ordnung ist, dann wird bzw. bleibt der Relais-Kontakt 6 geöffnet und der Widerstand 7 wird ausgeschaltet bzw. der Stromverbraucher wird aus dem Schaltkreis weggeschaltet.

Geschaltet wird also immer nur dann, wenn eine Zustandsänderung (d.h. in Ordnung bzw. nicht in Ordnung) der LED-Leuchte auftritt. Daraus ergibt sich dann:
A) Leuchte in Ordnung bzw. Relais 6 geschlossen: im Falle der reinen "Warmabfrage" kann während des Betriebs der Strom ungehindert durch den Widerstand 7 fließen. Im Falle der reinen "Kaltabfrage" kann der Prüfstrom während des ausgeschalteten Zustandes ebenfalls ungehindert durch den Widerstand 7 fließen. Auch die Kombination beider Abfrage-Arten funktioniert zu jeder Zeit.
B) Leuchte nicht in Ordnung bzw. Relais 6 geöffnet: im Falle der reinen "Warmabfrage" kann während des Betriebs der Strom nicht mehr durch den Widerstand 7 fließen. Im Falle der reinen "Kaltabfrage" kann der Prüfstrom während des ausgeschalteten Zustandes ebenfalls nicht mehr durch den Widerstand 7 fließen. Der Bordcomputer 1 stellt einen Fehler fest. Auch die Kombination beider Abfrage-Arten ergibt zu jeder Zeit eine Fehlermeldung. Sollte der Betriebsstrom der LED-Leuchte bzw. der Prüfstrom durch die Leuchte dennoch so hoch sein, dass der Bordcomputer 1 die Leuchte nicht als defekt erkennt, dann kann in einer vorteilhaften Ausprägung ein weiteres Schaltelement 5 wie in Fig. 2 beschrieben ergänzt werden.

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also "etwa 3" soll ebenfalls "3" oder "im Wesentlichen radial" soll auch "radial" umfassen). Der Ausdruck "bzw." bedeutet überdies "und/oder".

## Patentansprüche

1. Verfahren zur Überwachung einer LED-Leuchte (4) bzw. mehrerer LED-Leuchten (4) eines Fahrzeugs, wobei
eine vom Fahrzeug-Bordcomputer (1) bzw. der Fahrzeug-Elektronik angesteuerte und überwachte Leuchte (4) um eine zusätzliche integrierte oder externe elektronische Schaltung ergänzt wird, die sowohl bei einer "Warmabfrage" im eingeschalteten Leuchten-Zustand als auch bei einer "Kaltabfrage" im ausgeschalteten Leuchten-Zustand eine korrekte Auswertung der Leuchten-Funktion zulässt,
indem die LED-Leuchte (4) mittels einer Elektronik (30) überwacht wird, **dadurch gekennzeichnet, dass** diese Elektronik (30) ein bi-stabiles Relais (6) schaltet und damit einen Stromverbraucher (7) ein- bzw. ausschaltet.

2. Verfahren zur Überwachung von LED-Leuchten an Fahrzeugen nach Anspruch 1, wobei die Umschaltung des bi-stabilen Relais (6) nur dann erfolgt, wenn der Status der angeschlossenen Leuchte nicht mit dem Status des bi-stabilen Relais übereinstimmt, wobei die Umschaltung vorzugsweise nur während einer Warmabfrage erfolgt und vorzugsweise während einer Kaltabfrage kein Umschalten des bi-stabilen Relais erfolgt.

3. Verfahren zur Überwachung von LED-Leuchten an Fahrzeugen nach Anspruch 1 oder 2, wobei zum Umschalten des Relais die Versorgungsspannung der LED verwendet wird, vorzugsweise nur die Versorgungsspannung der LED verwendet wird und weiter bevorzugt keine zusätzliche Versorgungsspannung zur Versorgungsspannung der LED verwendet wird.

4. Verfahren zur Überwachung von LED-Leuchten an Fahrzeugen nach Anspruch 1, 2 oder 3, wobei die Elektronik (30) einen Stromsensor (2) und eine Auswert-Elektronik (3) aufweist und/oder wobei das bi-stabile Relais (6) mechanisch oder elektronisch aufgebaut sein kann.

5. Verfahren zur Überwachung von LED-Leuchten an Fahrzeugen nach einem der Ansprüche 1 bis 4, wobei der Stromverbraucher (7) durch einen Leistungswiderstand realisiert wird.

6. Verfahren zur Überwachung von LED-Leuchten an Fahrzeugen nach einem der Ansprüche 1 bis 5, wobei das bi-stabile Relais (6) seinen Schaltzustand auch ohne anliegende Versorgungsspannung aufrechterhält.

7. Verfahren zur Überwachung von LED-Leuchten an Fahrzeugen nach einem der vorhergehenden Ansprüche, wobei das bi-stabile Relais (6) in einer Reihenschaltung zum Stromverbraucher (7) geschaltet ist.

8. Verfahren zur Überwachung von LED-Leuchten an Fahrzeugen nach einem der vorhergehenden Ansprüche, wobei eine Rücksetz-Funktion derart ausgestaltet wird, dass parallel zum bi-stabilen Relais (6) eine Überbrückungs-Schaltung integriert wird.

9. Verfahren zur Überwachung von LED-Leuchten an Fahrzeugen nach einem der vorhergehenden Ansprüche,
wobei ein Schaltelement (5) in Reihe zur LED-Leuchte (4) und zur Überwachungs-Elektronik (30) bereitgestellt wird;
das bi-stabiles Relais (6) in Reihe zum Stromverbraucher (7) bereitgestellt wird; und
ein Elektronik-Modul (8) parallel zum Schaltelement (5) bereitgestellt wird, wobei mittels Elektronik-Modul (8) eine Rücksetzfunktion z.B. nach dem Austausch einer defekten Leuchte realisiert werden kann.

10. Verfahren zur Überwachung von LED-Leuchten an Fahrzeugen nach Anspruch 8, wobei das Schaltelement (5) und das bi-stabile Relais (6) zu einem Schaltelement zusammengefasst werden.

11. Vorrichtung zur Überwachung einer LED-Leuchte (4) eines Fahrzeugs mit:
einer elektronischen Schaltung (30), die eine "Warmabfrage" im eingeschalteten Zustand der LED-Leuchte (4) und ein "Kaltabfrage" im ausgeschalteten Zustand der LED-Leuchte (4) zulässt,
einem Stromverbaucher (7)
wobei die elektronischen Schaltung (30) dazu angepasst ist, die LED-Leuchte (4) zu überwachen
**dadurch gekennzeichnet, dass** die Vorrichtung enthält ein bi-stabiles Relais, welches zusammen mit dem vorzugsweise mit ihm in Reihe geschalteten Stromverbraucher von der elektrischen Schaltung ein- und ausgeschaltet werden kann.

12. Vorrichtung nach Anspruch 11, wobei die elektronische Schaltung (30) einen Stromsensor (2) und eine Auswert-Elektronik (3) aufweist.

13. Vorrichtung nach Anspruch 11 oder 12, weiter mit:
einem Schaltelement (5), das in Reihe zur LED-Leuchte (4) und zur Überwachungs-Elektronik (30) bereitgestellt wird; und
einem Elektronik-Modul (8) das parallel zum Schaltelement (5) geschaltet ist, wobei das mittels Elektronik-Modul (8) eine Rücksetzfunktion z.B. nach dem Austausch einer defekten Leuchte realisiert werden kann.

14. Vorrichtung zur Überwachung von LED-Leuchten an Fahrzeugen nach einem der Ansprüche 11 bis 13, wobei in einer speziellen Ausprägung das Schaltelement (5) und das bi-stabile Relais (6) zu einem Schaltelement zusammengefasst werden.

## Claims

1. A method of monitoring an LED lamp (4) or a plurality of LED lamps (4) in a vehicle,
wherein
a lamp (4), which is controlled and monitored by the onboard computer (1) of the vehicle or by the vehicle electronic circuit, is supplemented by an additional integrated or external electronic circuit that allows for a correct evaluation of the lamp function both in case of an "operative scan" when the lamp is switched on and in case of an "inoperative scan" when the lamp is switched off,
by monitoring the LED lamp (4) by means of an electronic circuit (30), **characterised in that** this electronic circuit (30) switches a bi-stable relay (6), thus switching on or off a current consumer (7).

2. The method of monitoring LED lamps in vehicles according to claim 1, wherein the bi-stable relay (6) is only switched if the state of the connected lamp does not correspond to the state of the bi-stable relay, wherein switching is preferably only effected during an operative scan, whereas switching of the bi-stable relay preferably is not effected during an inoperative scan.

3. The method of monitoring LED lamps in vehicles according to claim 1 or 2, wherein for switching the relay the supply voltage of the LED is used, preferably only the supply voltage of the LED is used, and more preferably no supply voltage in addition to the supply voltage of the LED is used.

4. The method of monitoring LED lamps in vehicles according to claim 1, 2 or 3, wherein the electronic circuit (30) comprises a current sensor (2) and evaluation electronics (3) and/or wherein the bi-stable relay (6) may have a mechanical or an electronic structure.

5. The method of monitoring LED lamps in vehicles according to any one of claims 1 to 4, wherein the current consumer (7) is realised by a power resistance.

6. The method of monitoring LED lamps in vehicles according to any one of claims 1 to 5, wherein the bi-stable relay (6) maintains its switching state even without a supply voltage being applied.

7. The method of monitoring LED lamps in vehicles according to any one of the preceding claims, wherein the bi-stable relay (6) is connected in series to the current consumer (7).

8. The method of monitoring LED lamps in vehicles according to any one of the preceding claims, wherein a reset function is configured such that a bypass circuit is connected in parallel to the bi-stable relay (6).

9. The method of monitoring LED lamps in vehicles according to any of the preceding claims,
wherein a switching element (5) is connected in series to the LED lamp (4) and the monitoring electronic circuit (30);
the bi-stable relay (6) is connected in series to the current consumer (7); and
an electronic module (8) is connected in parallel to the switching element (5),
wherein a reset function may be realised by the electronic module (8), e.g., upon the exchange of a defect lamp.

10. The method of monitoring LED lamps in vehicles according to claim 8, wherein the switching element (5) and the bi-stable relay (6) are combined to a switching element.

11. A device for monitoring an LED lamp (4) in a vehicle comprising:
an electronic circuit (30) admitting an "operative scan" when the LED lamp (4) is switched on and an "inoperative scan" when the LED lamp (4) is switched off,
a current consumer (7),
wherein the electronic circuit (30) is adapted to monitor the LED lamp (4),
**characterised in that** the device comprises a bi-stable relay that may be switched on and off by the electric circuit together with the current consumer, which is preferably connected to it in series.

12. The device according to claim 11, wherein the electronic circuit (30) comprises a current sensor (2) and evaluation electronics (3).

13. The device according to claim 11 or 12, further comprising:
a switching element (5) that is connected in series to the LED lamp (4) and the monitoring electronic circuit (30); and
an electronic module (8) which is connected in parallel to the switching element (5), wherein a reset function may be realised by the electronic module (8), e.g., upon the exchange of a defect lamp.

14. The device for monitoring LED lamps in vehicles according to any one of claims 11 to 13, wherein in a specific embodiment the switching element (5) and the bi-stable relay (6) are combined to a switching element.

## Revendications

1. Procédé de surveillance d'une lampe à DEL (4) ou de plusieurs lampes à DEL (4) d'un véhicule,
une lampe (4) commandée et surveillée par l'ordinateur de bord du véhicule (1) ou par l'électronique du véhicule étant complétée par un circuit électronique intégré ou externe additionnel, lequel permet d'évaluer correctement le fonctionnement de la lampe tant suite à une « demande à chaud » en état d'activation de la lampe que suite à une « demande à froid » en état de désactivation de la lampe, la lampe à DEL (4) étant surveillée au moyen d'une électronique (30),
**caractérisé en ce que** ladite électronique (30) active un relais bistable (6) et par conséquent active ou désactive un récepteur de courant (7).

2. Procédé de surveillance de lampes à DEL sur des véhicules selon la revendication 1, où la commutation du relais bistable (6) n'est réalisée que si l'état de la lampe raccordée ne correspond pas à l'état du relais bistable, la commutation n'étant préférentiellement réalisée que lors d'une demande à chaud et aucune commutation du relais n'étant préférentiellement réalisée lors d'une demande à froid.

3. Procédé de surveillance de lampes à DEL sur des véhicules selon la revendication 1 ou la revendication 2, où la tension d'alimentation de la DEL, préférentiellement la seule tension d'alimentation de la DEL, est appliquée pour la commutation du relais, et où plus particulièrement aucune tension d'alimentation additionnelle à la tension d'alimentation de la DEL n'est appliquée.

4. Procédé de surveillance de lampes à DEL sur des véhicules selon la revendication 1, la revendication 2 ou la revendication 3, où l'électronique (30) comporte un capteur de courant (2) et une électronique d'évaluation (3), et/ou le relais bistable (6) peut être mécanique ou électronique.

5. Procédé de surveillance de lampes à DEL sur des véhicules selon l'une des revendications 1 à 4, où le récepteur de courant (7) est réalisé par une résistance de puissance.

6. Procédé de surveillance de lampes à DEL sur des véhicules selon l'une des revendications 1 à 5, où le relais bistable (6) maintient son état de commutation même sans tension d'alimentation appliquée.

7. Procédé de surveillance de lampes à DEL sur des véhicules selon l'une des revendications précédentes, où le relais bistable (6) est monté en série avec le récepteur de courant (7).

8. Procédé de surveillance de lampes à DEL sur des véhicules selon l'une des revendications précédentes, où une fonction de réinitialisation est prévue en ce qu'un circuit de pontage est intégré parallèlement au relais bistable (6).

9. Procédé de surveillance de lampes à DEL sur des véhicules selon l'une des revendications précédentes,
où un élément de commutation (5) est monté en série avec la lampe à DEL (4) et l'électronique de surveillance (30) ;
le relais bistable (6) est monté en série avec le récepteur de courant (7) ; et
un module électronique (8) est monté parallèlement à l'élément de commutation (5), où une fonction de réinitialisation peut être réalisée au moyen du module électronique (8), p. ex. après le changement d'une lampe défectueuse.

10. Procédé de surveillance de lampes à DEL sur des véhicules selon la revendication 8, où l'élément de commutation (5) et le relais bistable (6) sont regroupés en un seul élément de commutation.

11. Dispositif de surveillance d'une lampe à DEL (4) d'un véhicule, avec :
un circuit électronique (30) permettant une « demande à chaud » en état d'activation de la lampe à DEL (4) et une « demande à froid » en état de désactivation de la lampe à DEL (4),
un récepteur de courant (7),
le circuit électronique (30) étant prévu pour surveiller la lampe à DEL (4),
**caractérisé en ce que** ledit dispositif contient un relais bistable, lequel peut être activé et désactivé par le circuit électrique, en commun avec le récepteur de courant monté préférentiellement en série avec lui.

12. Dispositif selon la revendication 11, où le circuit électronique (30) comporte un capteur de courant (2) et une électronique d'évaluation (3).

13. Dispositif selon la revendication 11 ou 12, avec en outre :
un élément de commutation (5), monté en série avec la lampe à DEL (4) et l'électronique de surveillance (30) ; et
un module électronique (8), monté en parallèle avec l'élément de commutation (5), une fonction de réinitialisation pouvant être réalisée au moyen du module électronique (8), p. ex. après le changement d'une lampe défectueuse.

14. Dispositif de surveillance de lampes à DEL sur des véhicules selon l'une des revendications 11 à 13, où, dans une exécution spéciale, l'élément de commutation (5) et le relais bistable (6) sont regroupés en un seul élément de commutation.
